# EUROPEAN PATENT APPLICATION

(11) **EP 2 210 462 A1**
(43) Date of publication of application: **28.07.2010**
(21) Application number: 09381001.8
(22) Date of filing: 21.01.2009
(51) Int. Cl.: A01C 1/02

(54) **Germinator**

(71) Applicant: Semillas Batlle, S.A., 08750 Molins de Rei (ES)
(72) Inventor: Batlle Valldeperes, Ramón, 08750, MOLINS DE REI (ES)
(74) Representative: Martin Santos, Victoria Sofia

(57) **Abstract**

Greenhouse germinator which consists of a tray (1), which is filled with water until it makes contact with the lower face of a grid (2) on which seeds are uniformly distributed for germination, and a greenhouse lid (3) which is arranged on the edge of the tray, covering the grid and leaving a space for germination of seedlings, due to its configuration, the germinator is simpler and more easy to use and the cost is reduced.

## Description

### OBJECT OF THE INVENTION

The object of the present invention is a greenhouse germinator for sprouting seedlings so that they can be cultivated in a simple and easy manner using seeds appropriate for human or animal consumption, as well as the procedure for growing the seedlings from seed.

The invention is characterised by its special configuration, design, and interaction of the elements which make up the germinator which is the object of the invention in such a way that a germinator is obtained using seeds, where the germinator functions using water only, based on the greenhouse effect produced in its interior.

In addition to the greenhouse germinator, a further object of this invention is the procedure applied in using the germinator, permitting cultivation of the seedlings in an easy, rapid and simple manner.

Therefore, the present invention is circumscribed by the scope of devices used for cultivation and germination of sprouts and seedlings.

### BACKGROUND TO THE INVENTION

To date, there are various models of germinator available on the market, for example, one which has a base container with no valve, for collecting excess water, three containers with a valve for germinating seeds, and a container with a valve for redistribution of the water.

Other germinators are provided with a lid, various containers with a valve, and a container base for collecting excess water which accumulates in a collection base.

All the germinators mentioned, despite the fact that they fulfil the desired purpose of facilitating seed germination for obtaining sprouting seedlings appropriate for human consumption, are relatively complicated in construction and function.

Therefore, the object of the present invention is to simplify the existing germinators in order to achieve a germinator which will not require a collector base for excess water, which has no valves, and in which the number of parts and elements involved are clearly reduced.

### DESCRIPTION OF THE INVENTION

This invention of a greenhouse germinator for seedlings enables sprouting seedlings to be grown from seed consisting of a tray, a grid and a greenhouse cover.

The tray will be such that it is filled with water to a level which ensures that the water is always in contact with the lower part of the grid.

The grid has a reticular configuration with open spaces which uniformly distribute the seeds on the grid.

The grid is housed inside the tray in the vicinity of its upper edge, and both the tray and the grid are provided with complementary means which permit support and fixation of the grid on the tray in a level manner.

The lid is simply arranged on the tray and grid arrangement covering them above. The lid seeks to create a greenhouse effect in the interior space, maintaining a particular temperature deriving from the heat retained and the biological processes of germination. The lid is provided with openings which enable any gases released, which may be emitted as a result of biological reaction.

The procedure used for growing the seedlings with the germinator which is the object of the invention includes the following stages:
- Submerging the seeds in a recipient with water.
- Draining, drying and distributing the seeds uniformly on the grid.
- Filling the tray with water so that when the grid is placed on the tray the water is always in contact with the lower part of the grid.
- When the seedlings have sprouted and begin to touch the lid, the lid is removed and they are allowed to grow until they reach the desired height.
- The seedlings are then cut according to variety and taste.

The process is repeated each time new seedlings need to be grown.

Seeds which may be used for growing in the germinator which is the object of the invention include green soy, lentils, radish, red cabbage and alfalfa.

The consequences of using a greenhouse germinator such as that described herein are clear and evident, on one hand the simplicity of the construction, which, as a result, makes it easy to handle and ensures reduced production costs, in addition to the easy cultivation which makes handling and operating simple for the user.

### EXPLANATION OF THE FIGURES

The present descriptive report is complemented by a set of plans, the figures of which illustrate the most significant details of the invention, but which are in no way restrictive.

Figure 1 shows a representation in exploded form of the elements which comprise the greenhouse germinator which is the object of the invention.

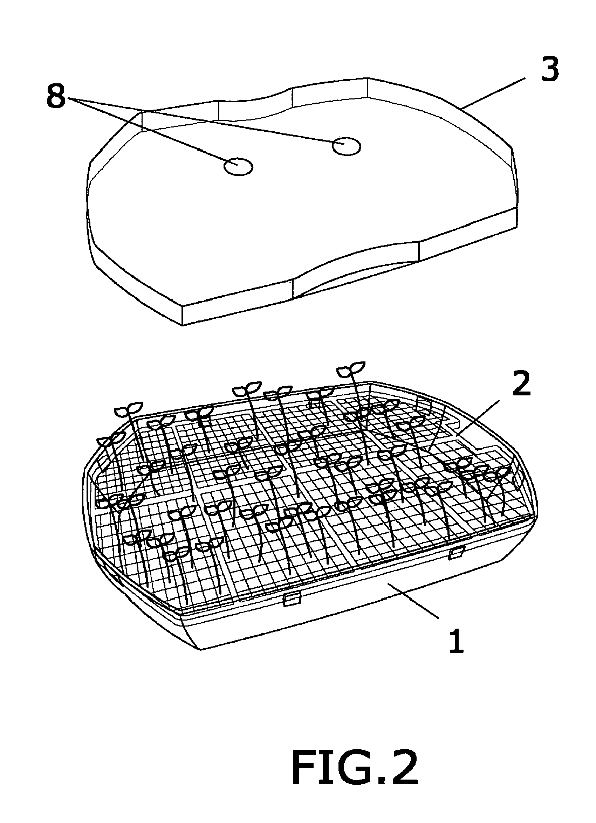

Figure 2 shows a perspective view of the greenhouse germinator which is the object of the invention in its mounted state on which a series of seedlings have been germinated.

### PREFERRED EMBODIMENT OF THE INVENTION

In the light of the above figures, below a mode of preferred embodiment of the proposed invention is described.

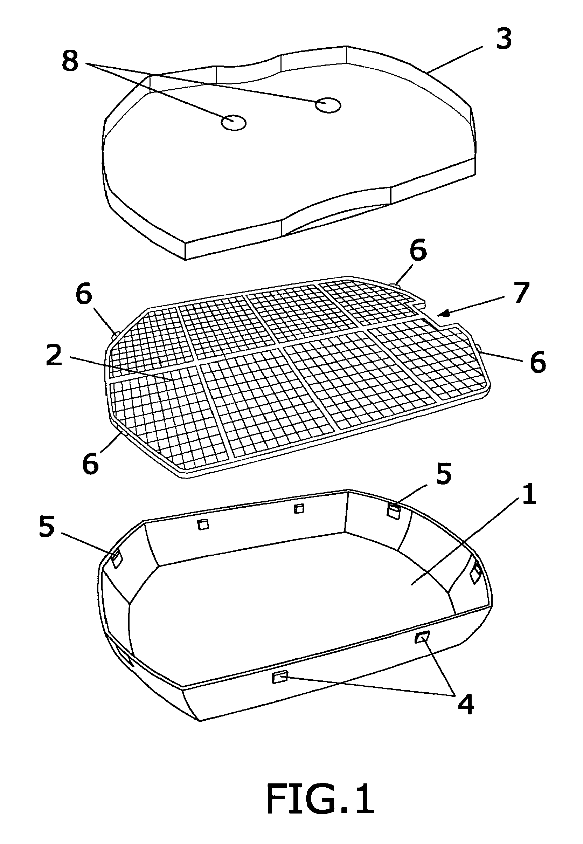

Figure 1 shows how the germinator which is the object of the invention consists of three parts:
- A tray (1) or base element which is to be filled with water
- A grid (2) where the seeds are uniformly distributed
- A greenhouse lid (3) which is arranged on the edge of the tray covering the upper area of the grid.

For the purpose of achieving a perfect interoperability between the different parts of the greenhouse germinator which is the object of the invention, each one of parts is provided with a specific series of constructive characteristics.

Thus the tray which may present any configuration and design, preferably being, but not restricted to, the form shown in the figure, is provided on two of its facing sides projections which act as wedges defining an upper support surface which act as supports (4) which hold the grid on the upper edge of the same.

Furthermore, and in order to link the grid to the tray, said tray is provided with openings (5) in which projections would be fitted to act as flaps (6) arranged in a corresponding manner on the grid.

The means of support and attachment of the grid on the upper edge of the tray could all be applicable from a flap which is provided with a projection on its end or serving directly simply as a means of support. The objective is to maintain the grid in a safe and level manner in respect of the upper surface of the water, as both should be in contact.

In order to facilitate handling of the grid when it is inserted and removed from the tray (1), said tray is provided with an entrance (7) which, when it has been attached to the upper edge of the tray, enables a finger to be inserted.

Finally, the greenhouse lid (3) is provided with a configuration such that when it is placed on the upper edge of the tray it leaves a free space between the grid (2) and the upper part of the lid (3). The lid does not need to be linked to the tray (1), it is sufficient to simply rest it on the tray (1); however, it may be provided with a design which enables it to be easily gripped.

In order to facilitate the expulsion of gases generated by the biological processes, the lid is provided on its upper part with at least one opening (8).

The essential nature of this invention is not altered by variations in materials, form, size and arrangement of the component elements, described in a manner which is in no way restrictive but is sufficient for an expert in the art to proceed to its reproduction.

## Claims

1. Greenhouse germinator for seedlings **characterised in that** it is provided with :
- a tray (1) on which water is placed
- a grid(2) which is supported and/or linked in an even manner to the tray, and on which sees are distributed.
- a greenhouse lid (3) which is arranged on the tray(1) and grid (2) arrangement.

2. Greenhouse germinator for seedlings according to claim 1, **characterised in that** in order to support the grid (2) on the tray(1) on two facing sides of the tray and in the proximity of its edge, projections are arranged as wedges which define an upper support surface functioning as supports (4).

3. Greenhouse germinator for seedlings according to claims 1 or 2 **characterised in that** in order to fix the grid on the edge of the tray (1), the edges of the tray are provided with openings (5) on which projections would be fitted as flaps (6) provided in a corresponding manner on the grid(2).

4. Greenhouse germinator for seedlings according to claims 1 or 2 or 3 **characterised in that** the greenhouse lid (3) is provided with at least one opening (8).

5. Procedure for growing seedlings in the previously claimed germinator, **characterised in that** it consists of the following stages:
- Submerging the seeds in a recipient with water
- Draining, drying and distributing the seeds uniformly on the grid.
- Filling the tray with water so that when the grid is placed on the tray the water is always in contact with the lower part of the grid.
- When the seedlings have sprouted and begin to touch the lid, it is removed and they are allowed to grow until they reach the desired height.
- The seedlings are then cut according to variety and taste.
